(19) **Europäisches Patentamt**

**European Patent Office**

**Office européen des brevets**

(11) Veröffentlichungsnummer: **0 358 201**

**A2**

## (12) EUROPÄISCHE PATENTANMELDUNG

(21) Anmeldenummer: **89116473.3**

(22) Anmeldetag: **06.09.89**

(51) Int. Cl.⁵: **H04L 13/00 , H04L 17/00**

(30) Priorität: **09.09.88 DE 3830797**

(43) Veröffentlichungstag der Anmeldung:
**14.03.90 Patentblatt 90/11**

(84) Benannte Vertragsstaaten:
**CH DE FR GB IT LI SE**

(71) Anmelder: **Siemens Aktiengesellschaft**
**Wittelsbacherplatz 2**
**D-8000 München 2(DE)**

(72) Erfinder: **Hildebrandt, Anke**
**Kirchstrasse 15**
**D-8046 Garching(DE)**
Erfinder: **Gustafsson, Jan**
**Jörgstrasse 27**
**D-8000 München 21(DE)**

(54) **Verfahren zum Darstellen von akzentuierten Buchstaben.**

(57) Die Erfindung betrifft ein Verfahren zum Darstellen von akzentuierten Buchstaben auf dem Monitor von Fernschreib-und Textstationen. Aufgabe ist es, dieses Darstellen bedienerfreundlich mit möglichst wenigen Tastenbetätigungen zu erreichen, wobei die Darstellung in einem Vorgang auf dem Monitor erfolgen soll.

Die Aufgabe wird dadurch gelöst, daß zwei vorhandene, nur in Verbindung mit einer gleichzeitig betätigten anderen Taste wirksame Steuertasten zur Bildung eines Codes für den akzentuierten Buchstaben verwendet werden, so daß diese mit dem Akzent versehene Buchstaben in einem Vorgang auf dem Monitor dargestellt werden kann. Ob ein Akzent dargestellt werden soll, hängt davon ab, ob der zugehörige Buchstabe ein Vokal oder ein Konsonant ist.

Die Anwendung des Verfahrens kann bei Fernschreib- und Textstationen und bei Personalcomputern erfolgen.

EP 0 358 201 A2

# Verfahren zum Darstellen von akzentuierten Buchstaben

Die Erfindung betrifft ein Verfahren zum Darstellen von akzentuierten Buchstaben auf dem Monitor einer Fernschreib-und Textstation, wobei der Tastatur der Fernschreib- und Textstation eine erste und eine zweite in Verbindung mit dem gleichzeitigen Betätigen einer weiteren Funktionstaste unterschiedliche Funktionen auslösende Steuertaste zugeordnet sind.

Es ist allgemein bekannt, bei Fernschreib- und Textstationen einen Vokal (z.B. a) mit einem Akzent (z.B." ' ") zu versehen, indem man nach Betätigen der Umschaltertaste (Shift-Taste) die entsprechende Akzenttaste betätigt und danach nach Loslassen der Umschalttaste die Buchstabentaste für den Vokal (a) betätigt. Dabei wird dann zuerst der Akzent und danach daruntergesetzt der Vokal auf dem Monitor dargestellt (z.B. Siemens Bildschirmschreibmaschine T 4200).
Bei Personalcomputern ist es ähnlich bekannt, wobei dort jedoch bei Betätigen der Umschalttaste und der Aktzenttaste zunächst noch nichts dargestellt wird. Die Darstellung von Akzent und Vokal erfolgt dann gleichzeitig bei dem anschließenden Betätigen der Vokaltaste.
Weiterhin ist es bekannt, bei Fernschreib- und Textstationen (z.B. Siemens Fernschreiber T 1200 CT) besondere Steuertasten (CTRL und ALT) vorzusehen, die bei gemeinsamer Betätigung mit anderen Funktionstasten oder Buchstabentasten unterschiedliche Funktionen auslösen. Solche Funktionen sind z.B.: Sprung zum nächsten Wort, Sprung zum Zeilenanfang, Tabulator löschen usw. Diese Steuertasten haben also nur eine Funktion, wenn sie zusammen mit einer weiteren Taste benutzt werden.

Die Aufgabe der Erfindung soll nun darin bestehen, mit Akzenten versehene Buchstaben mit bereits an der Fernschreib- und Textstation vorhandenen Mitteln in einfacherer als üblicher Weise darzustellen.

Dies wird dadurch erreicht, daß durch gleichzeitiges Auswerten des Codes einer der Steuertasten (CTRL/ALT) und des Codes einer Buchstabentaste beim gleichzeitigen Betätigen der ersten Steuertaste (CTRL) und einer Vokaltaste (z.B. a) der entsprechende Vokal (a) in einem Abbildungsvorgang mit einem ersten Akzent (z.B. ´) versehen auf dem Monitor aufgezeigt wird, daß bei gleichzeitigem Betätigen der zweiten Steuertaste (ALT) und einer Vokaltaste (z.B. a) der entsprechende Vokal (a) in einem Abbildungsvorgang mit einem zweiten Akzent (z.B. `) versehen auf dem Monitor aufgezeigt wird.

Hieraus ergeben sich die Vorteile, daß zur Darstellung eines akzentuierten Buchstabens nunmehr zwei Tasten (bisher drei) betätigt werden müssen, daß der akzentuierte Buchstabe sofort bei Betätigen der Buchstabentaste auf dem Monitor erscheint und daß darüber hinaus zweite Tastenfunktionen (Ziffern- Zeichenreihe) für andere Funktionen frei werden.

Nachstehend wird das erfindungsgemäße Verfahren näher erläutert. Es wird davon ausgegangen, daß die mit Monitor und Tastatur versehenen Fernschreib- und Textstationen zwei zusätzliche Steuertasten in der Tastatur besitzen. Diese Steuertasten CTRL und ALT dienen dazu, um in Verbindung mit der gleichzeitigen Betätigung einer anderen Funktionstaste oder Buchstabentaste eine Erweiterung der möglichen Funktionen zu erreichen.

Insbesondere dienen sie dazu, mit bei solchen Fernschreib-und Textstationen vorgesehenen Funktionstasten in einem Funktionstastenfeld der Tastatur und mit der Cursorsteuerung zusammenzuwirken. Jeder dieser Steuertasten, die wie die Umschaltertaste je zweimal in der Tastatur vorgesehen sind, ist ein bestimmter Code zugeordnet, der in Verbindung mit einem einer anderen Funktion zugeordneten Code eine neue Funktion auslöst. Hieraus ergibt sich die Möglichkeit, die gestellte Aufgabe der Akzentuierung von Buchstaben in der gewünschten Weise zu lösen. jeder Steuertaste wird ein bestimmter Akzent zugeordnet, der jedoch nur dann verwirklicht wird, wenn der Code der Steuertaste mit einem Code eines Buchstabens ergänzt wird. Dabei wird noch unterschieden, ob der ergänzende Code ein Code eines Vokals oder eines Konsonanten ist. Bei Vokalen wird je nach Steuertaste ein Buchstabe mit einem Akzent erzeugt, während bei Konsonanten keine Reaktion erfolgt.
Aus dem Vorstehenden ist zu entnehmen, daß nach dem erfindungsgemäßen Verfahren die gestellte Aufgabe in vorteilhafter Weise gelöst werden kann.

## Ansprüche

1. Verfahren zum Darstellen von akzentuierten Buchstaben auf dem Monitor einer Fernschreib- und Textstation, wobei der Tastatur der Fernschreib- und Textstation eine erste und eine zweite, in Verbindung mit dem gleichzeitigen Betätigen einer weiteren Funktionstaste unterschiedliche Funktionen auslösende Steuertasten zugeordnet sind, **dadurch gekennzeichnet,** daß durch gleichzeitiges Auswerten des Codes einer der Steuertasten (CTRL/ALT) und des Codes einer Buchstabentaste (z.B. a) beim gleichzeitigen Betätigen der ersten Steuertaste (CTRL) und einer Vokaltaste (z.B. a) der entsprechende Vokal (a) in einem Abbildungsvorgang mit einem ersten Akzent (z.B. ´) versehen auf dem Monitor aufgezeigt wird, daß bei gleichzeitigem Betätigen der zweiten Steuertaste (ALT) und einer Vokaltaste (z.B. a) der entsprechende Vokal (a) in einem Abbildungsvorgang mit einem zweiten Akzent (z.B. `) versehen auf dem Monitor aufgezeigt wird und daß bei gleichzeitigem Betätigen einer der Steuertasten (CTRL oder ALT) und einer Konsonanttaste keine Reaktion erfolgt.

2. Verfahren nach patentanspruch 1, **dadurch gekennzeichnet,** daß eine der Steuertasten (CTRL/ALT) zusammen mit einer Buchstabentaste nur dann zur Aufzeichnung eines Akzents wirksam wird, wenn die Buchstabentaste einem Vokal entspricht.